# EUROPEAN PATENT SPECIFICATION

(11) **EP 2 352 383 B1**
(45) Date of publication and mention of the grant of the patent: **23.04.2014**
(21) Application number: 09756770.5
(22) Date of filing: 30.10.2009
(51) Int. Cl.: A23G 1/00, A23G 1/20, A23G 1/50, A23G 1/54

(54) **CENTREFILLED CONFECTIONERY COMPOSITION**
MITTIG GEFÜLLTE KONFEKTZUSAMMENSETZUNG
COMPOSITION DE CONFISERIE FOURRÉE

(30) Priority: 31.10.2008 GB 0820103
(43) Date of publication of application: 10.08.2011
(73) Proprietor: Mondelez UK Holdings & Services Limited, Uxbridge, Middlesex UB8 1DH (GB)
(72) Inventor: HARRIS, Adam, Birmingham West Midlands B29 7QQ (GB); BALL, Billie, Uxbridge, Middlesex UB8 1DH (GB)
(74) Representative: Ward, David Ian
(86) International application number: PCT/GB2009/002586
(87) International publication number: WO 2010/049701

(56) References cited:
- EP-A1- 1 378 175
- EP-A2- 0 321 449
- US-A- 5 266 348
- Anonymous: "Secret Chocolate Bar" XP002563525 Retrieved from the Internet: URL:http://www.doyouremember.co.uk/memory. php?memID=4072> [retrieved on 2010-01-15]

## Description

The present invention relates to a centrefilled confectionery composition.

Chocolate is a confectionery product derived from cocoa, sugar, and optionally milk fat, and is a common ingredient in confectionery compositions. In particular, chocolate is commonly used as an ingredient of a composite confectionery item. For example, chocolate may be applied as a coating on or around a biscuit, wafer or other centre, or may be incorporated into a confectionery composition as a continuous layer or as discrete pieces (e.g. 'chocolate chips').

There is a need for new and varied confectionery compositions in order to appeal to the consumer. In particular, there is a need for chocolate compositions having new and varied texture, taste or mouthfeel.

One well known type of chocolate composition is marketed by the Applicant under the FLAKE^{®} brand, and consists of a thin chocolate sheet, randomly folded longitudinally and arranged into a bar. The convoluted shape of the chocolate sheet is responsible for creating air pockets within the bar, giving the bar as a whole a soft, crumbly texture when bitten into by a consumer, even though the chocolate itself is relatively hard. An apparatus and method suitable for making products similar to those sold under the FLAKE^{®} brand are described in International (PCT) Patent Application publication number WO 03/005832, and in Chocolate, Cocoa and Confectionery: Science and Technology, by Bernard W. Minifie, 3rd edition, pages 187-188.

According to a first aspect of the invention, there is provided a confectionery composition comprising a chocolate shell and a continuous filling, wherein the chocolate shell comprises a convoluted chocolate sheet.

As used herein, the terms 'shell' and 'filling', when used in combination, are intended to have their usual meaning in the art, implying that, at least to some degree, the shell lies on the outside of the filling and provides at least some enclosure thereof. It is not necessary for the shell to completely enclose the filling, although there may be some embodiments of some aspects of the present invention in which this is the case. There may also be embodiments in which the filling is completely enclosed by the shell in two dimensions only, such as for example an open-ended tubular shell having a filling therein. It will be understood that enclosure of the filling by the shell may also be partial.

As used herein, the term 'convoluted chocolate sheet' is intended to mean a sheet of chocolate of substantially uniform thickness which has a non-planar shape with one or more folds. In some embodiments, the sheet has two or more folds. In particular, the sheet may be formed with a number of ridges and folds, the size of the ridges and folds being large in relation to the thickness of the sheet. The folds may be regular, so that (for example) the sheet is formed into hollow cylindrical tubes. The convoluted chocolate sheet may be formed into a layer having a thickness which is substantially greater than the thickness of the sheet. For example, the layer may be at least 10 times, at least 20 times, or at least 50 times thicker than the constituent chocolate sheet. It will be understood that this results in the bulk volume of the layer being significantly greater than the volume of constituent chocolate, the additional volume being air pockets defined between folds of the chocolate sheet. It will be understood that a 'layer of convoluted chocolate sheet' is exemplified (in isolation) by the prior art product sold by the Applicant under the name FLAKE^{®}.

As used herein, the term 'continuous' in relation to fillings is intended to indicate that the filling extends continuously throughout a filling region of the confectionery composition, rather than appearing in multiple discrete pieces.

In one embodiment, the chocolate shell comprises a layer of convoluted chocolate sheet, and contact between the filling and the layer of convoluted chocolate sheet is substantially limited to a surface of the layer of convoluted chocolate sheet (i.e. less than 10% or even less than 5 % of the filling penetrates the layer of convoluted chocolate sheet).

In one embodiment, the chocolate shell is elongate in shape. In a further embodiment, the chocolate shell is substantially tubular.

As used herein, 'tubular' is not limited to a cylindrical tube, but refers to any hollow elongate body. In some embodiments, the body may be substantially cylindrical. It will be understood that the tubular nature of the shell provides a filling cavity in which the filling is located. In the case of a fluid filling, the fluid will adopt the shape of the cavity.

In some embodiments, the continuous filling is completely enclosed within the chocolate shell. Thus, where the filling is a liquid or flowable material, it cannot leak during transport or storage. In particular, where the chocolate shell is substantially tubular, the open ends may be closed with chocolate or any other suitable material, such as a solid confectionery material.

In one embodiment, the chocolate shell comprises a first layer of convoluted chocolate sheet and a second layer of convoluted chocolate sheet substantially parallel to the first, and the continuous filling comprises a layer of a filling material disposed between the first and second layers of convoluted chocolate sheet.

In some embodiments, the first and second layers of convoluted chocolate sheet are substantially planar.

In an alternative embodiment, the chocolate shell comprises a layer of convoluted chocolate sheet and the continuous filling comprises a layer of filling material, and the layer of convoluted chocolate sheet and the layer of filling material are rolled together so as to form a structure having a spiral cross-section. In particular, the layer of convoluted chocolate sheet may lie on the outside of the layer of filling material in the spiral structure.

In one embodiment, the shell comprises a plurality of convoluted chocolate sheets, each convoluted chocolate sheet being substantially cylindrical; the continuous filling comprises an elongate bar of filling material; and the plurality of convoluted chocolate sheets are arranged around the surface of the elongate bar of filling material, substantially parallel to the longitudinal axis thereof. It will be understood that, as used herein, 'cylindrical' covers both solid and tubular cylinders.

According to a second aspect of the invention, there is provided a confectionery composition comprising a tubular shell defining a tubular cavity therein, and a filling located in the cavity, wherein the shell comprises a convoluted chocolate sheet.

It will be understood that the cavity is generally elongate and substantially aligned with the longitudinal axis of the tubular shell. In one embodiment, the cavity extends substantially along the length of the tubular shell. In some embodiments, the ends of the tubular cavity may be sealed to prevent leakage of filling from the shell. Suitable sealing materials include chocolate. In particular, the filling material may be a liquid and the ends of the tubular cavity may be sealed to prevent leakage of filling from the shell.

According to a third aspect of the present invention, there is provided a method of making a confectionery composition comprising:
(a) forming a substantially planar layer of convoluted chocolate sheet;
(b) shaping the layer of convoluted chocolate sheet so as to form a cavity; and
(c) applying a filling material to the layer of convoluted chocolate sheet.

As noted above, convoluted chocolate sheet is defined to be a non-planar sheet of chocolate. Hence, in this context, forming a substantially planar layer of convoluted chocolate sheet comprises forming convoluted chocolate sheet into a layer, the outer surfaces of which are substantially planar and parallel. It will be understood that, within this layer, the chocolate sheet itself retains its non-planar convoluted structure.

In some embodiments, applying a filling material to the layer of convoluted chocolate sheet is carried out after the layer of convoluted chocolate sheet has been shaped. For example, shaping the layer of convoluted chocolate sheet may comprise forming a cavity within the layer of convoluted chocolate sheet, and applying a filling material may comprise depositing a filling material within the cavity.

In one embodiment, forming a layer of convoluted chocolate sheet and shaping the layer of convoluted chocolate sheet comprises forming a substantially planar layer of convoluted chocolate sheet of substantially uniform thickness, and bending the layer of convoluted chocolate sheet to form a cavity therein.

Bending the layer of convoluted chocolate sheet may comprise passing the layer along a conveyor, in which the sides of the conveyor rise at steadily increasing angles to bend the layer into a channel shape. Alternatively, bending the layer may comprise introducing the layer of convoluted chocolate sheet into a mould cavity so that the layer adopts the shape of the inner surface of the cavity. This may be accomplished through shaking of the mould, and/or through insertion of a male die to force the layer into the cavity.

In an alternative further embodiment, forming a layer of convoluted chocolate sheet and shaping the layer of convoluted chocolate sheet comprises forming a substantially planar layer of convoluted chocolate sheet of substantially uniform thickness, and compressing part of the layer to form a region of reduced thickness, thereby producing a cavity.

Compression of the layer of convoluted chocolate sheet may be carried out by means of a roller having one or more projections on the surface thereof. As the roller is passed across the surface of the layer, the projection(s) are pressed into the layer of convoluted chocolate sheet to form the cavity.

In some embodiments, the method further comprises:
(d) applying a covering material to the filling material to enclose the filling material between the covering material and the layer of convoluted chocolate sheet.

In one embodiment, the covering material comprises an enrobing material, such as liquid chocolate or couverture. In a further embodiment, applying the covering material to the filling material to enclose the filling material comprises enrobing the layer convoluted sheet and filling material with the enrobing material.

In one embodiment, the covering material comprises a further layer of convoluted chocolate sheet. In a further embodiment, forming and shaping the layer of chocolate sheet comprises forming a first layer of convoluted chocolate sheet and shaping the first layer to define a first cavity in the surface thereof, the method further comprises forming a second layer of convoluted chocolate sheet and shaping the second layer of convoluted chocolate sheet to define a second cavity in the surface thereof, and applying the covering material to the filling material comprises bringing together the first and second layers of convoluted chocolate sheet so that the first and second cavities defined therein are substantially in registration. The cavity defined in the surface of the second layer may contain a second filling material, which may have the same or a different composition to the filling material in the cavity defined in the first layer.

In one embodiment, the layer of convoluted chocolate sheet and filling material may be formed or placed in one half of a book mould, and the covering material formed or placed in the other half of the book mould, such that applying the covering material to the filling material to enclose the filling material comprises closing the book mould to bring the covering material into contact with the filling material.

In one embodiment, shaping the layer of convoluted chocolate sheet comprises forming a substantially tubular cavity, and applying a filling material comprises depositing a filling material within the tubular cavity. The filling material may be deposited before, during or after shaping.

Forming a tubular cavity may comprise forming first and second layers of convoluted chocolate sheets, forming a channel in the surface of at least one of the first and second layers, and bringing the first and second layers together so as to cover the channel and thereby define a tubular cavity.

Alternatively, forming a tubular cavity may comprise forming a layer of convoluted chocolate sheet and removing chocolate material therefrom so as to form a tubular cavity. Removal of chocolate material may be carried out by mechanical methods such as drilling, or by selectively melting chocolate using electromagnetic radiation (e.g. an infra-red laser) or a stream of heated fluid (e.g. oil) or by any other means apparent to the skilled addressee.

Alternatively, forming a tubular cavity may comprise forming a layer of convoluted chocolate sheet having opposing edges, and bending the layer of convoluted chocolate sheet to bring together the opposite edges of the layer, thereby defining a tubular cavity.

In some embodiments, applying a filling material to the layer of convoluted chocolate sheet is carried out before the layer of convoluted chocolate sheet has been shaped. For example, applying a filling material to the layer of convoluted chocolate sheet may comprise applying a layer of filling material on the planar layer of convoluted chocolate sheet before shaping the layer of convoluted chocolate sheet.

In one embodiment, forming a substantially planar layer of convoluted chocolate sheet comprises forming a layer of convoluted chocolate sheet having opposing edges; and shaping the layer of convoluted chocolate sheet comprises bending the layer of convoluted chocolate sheet to bring together the opposite sides of the layer, forming a tubular outer layer of convoluted chocolate sheet enclosing the filling material. It will be understood that, depending on the dimensions of the layers and the nature of the filling material, this may result in the filling material adopting the shape of a cylinder (or other prismatic shape) which may be hollow or non-hollow.

In an alternative embodiment, shaping the layer of convoluted chocolate sheet comprises rolling the layers of convoluted chocolate sheet and filling material into a spiral. This may be done so that the layer of convoluted chocolate sheet lies towards the outside of the spiral, relative to the layer of filling material.

In one embodiment, the layer of convoluted chocolate sheet comprises a single continuous layer of convoluted chocolate sheet. In an alternative embodiment, the layer comprises a plurality of discrete pieces of convoluted chocolate sheet material. In a further embodiment, the layer comprises a plurality of tubes of convoluted chocolate sheet.

In one embodiment, shaping of the layer of convoluted chocolate sheet is caused by application of the filling material to the layer of convoluted chocolate sheet. For example, the filling material may be deposited on the upper surface of the layer of convoluted chocolate sheet such that it sinks into the layer under its own weight, creating cavities in the layer of convoluted chocolate sheet which are filled with the filling material.

According to a fourth aspect of the invention, there is provided a method of making a confectionery composition comprising:
(a) providing a bar of filling material; and
(b) applying convoluted chocolate sheet material to the surface of the bar of filling material so as to substantially surround the filling material.

In one embodiment, applying convoluted chocolate sheet material to the surface of the bar of filling material comprises rolling the bar of filling material across a bed of pieces of convoluted chocolate sheet material.

According to a fifth aspect of the invention, there is provided a method of making a confectionery composition comprising:
(a) forming a layer of convoluted chocolate sheet having one or more cavities therein; and
(b) applying a filling material to at least one cavity in the layer of convoluted chocolate sheet.

In one embodiment, forming a layer of convoluted chocolate sheet defining one or more cavities therein comprises extruding chocolate through a multi-outlet die head. Such a multi-outlet die head may consist of a die head (such as a circular die head) having several outlets located around the periphery thereof. Each outlet produces a ribbon of chocolate, with ribbons of chocolate from adjacent outlets interacting to produce a convoluted chocolate sheet. Areas of the die head which do not have an outlet may produce a corresponding cavity in the layer of convoluted chocolate sheet. For example, if the outlets are equally spaced around the circumference of a circular die head, without any outlets at the centre of the die head, a tubular layer of convoluted chocolate sheet may be produced.

Application of filling material may comprises co-extrusion of filling material through an additional outlet located within the die head.

In an alternative embodiment, forming a layer of convoluted chocolate sheet defining one or more cavities therein may comprise forming a layer of convoluted chocolate sheet of variable thickness. For example, the layer of convoluted chocolate sheet may be deposited on a conveyor of variable speed. A faster conveyor speed will produce a thinner layer of convoluted chocolate sheet (all other factors being constant), whilst a slower speed will produce a thicker layer of convoluted chocolate sheet. In this way, cavities (regions of thinner layer between thicker layer regions) may be defined.

According to a sixth aspect of the invention, there is provided a product producible by any of the third to fifth aspects of the invention.

The following comments and embodiments refer to all aspects of the invention.

The filling material may be liquid, paste or solid. Suitable liquids may include caramel, liqueurs, syrups and oils. Suitable pastes may include fondant cremes, fruit pastes, pralines, truffles, mousses, peanut butter and hazelnut chocolate paste. Suitable solids include nuts (whole or pieces), fruit (including dried fruit such as raisins, cranberries, etc.), marshmallow, biscuit, wafer, confectionery crisp, Turkish delight, jelly candy, toffee, fudge and nougat. Where appropriate, solid fillings may be present as a single continuous filling or in discrete pieces. Where appropriate, the filling material may be aerated or non-aerated. For example, the filling material may be aerated or non-aerated fat-based filling, such as truffle.

In one embodiment, the filling material may be chocolate flavoured. In one embodiment, the filling material, or where applicable one or each filling material, comprises a fat-based filling. In one further embodiment, the fat-based filling comprises a chocolate truffle.

The invention will now be further illustrated by the following Examples, with reference to the accompanying Figures, in which:
Figures 1 to 3 are schematic representations of exemplary methods of shaping a layer of convoluted chocolate sheet;
Figures 4 and 5 are schematic representations of exemplary methods for making a confectionery composition according to the third aspect of the invention;
Figure 6 is a schematic representation of an exemplary method of shaping a layer of convoluted chocolate sheet;
Figures 7 to 9 are schematic representations of exemplary methods for making a confectionery composition according to the third aspect of the invention;
Figure 10 is a schematic representation of an exemplary method of forming a layer of convoluted chocolate sheet defining cavities therein;
Figure 11 is a schematic representation of an exemplary method for making a confectionery composition according to the fifth aspect of the invention;
Figure 12 is a schematic representation of an exemplary method for making a confectionery composition according to the third aspect of the invention;
Figure 13 is a schematic representation of an exemplary method for making a confectionery composition according to the fourth aspect of the invention; and
Figures 14 and 15 are two series of photographs showing exemplary methods of shaping a layer of convoluted chocolate sheet.

### Convoluted chocolate sheet

Convoluted chocolate sheet is made as described in Chocolate, Cocoa and Confectionery: Science and Technology, by Bernard W. Minifie, 3rd edition, pages 187-188, using Buhler forming rolls 2 at 24-30°C, and deposited directly onto a moving conveyor 4 to form a planar layer 6. If desired, the temperature and recipe may be altered slightly, so as to produce a slightly differently-tasting product.

This convoluted sheet was immediately processed as described below.

### Filling material

A caramel toffee filling was produced in the usual manner, and used as the filling material as described below. However, other fillings may be employed - for example, fat based fillings, such as truffles which could be aerated or non-aerated, and water-based fillings such as caramel, fondants and fruit pastes.

### Example 1:

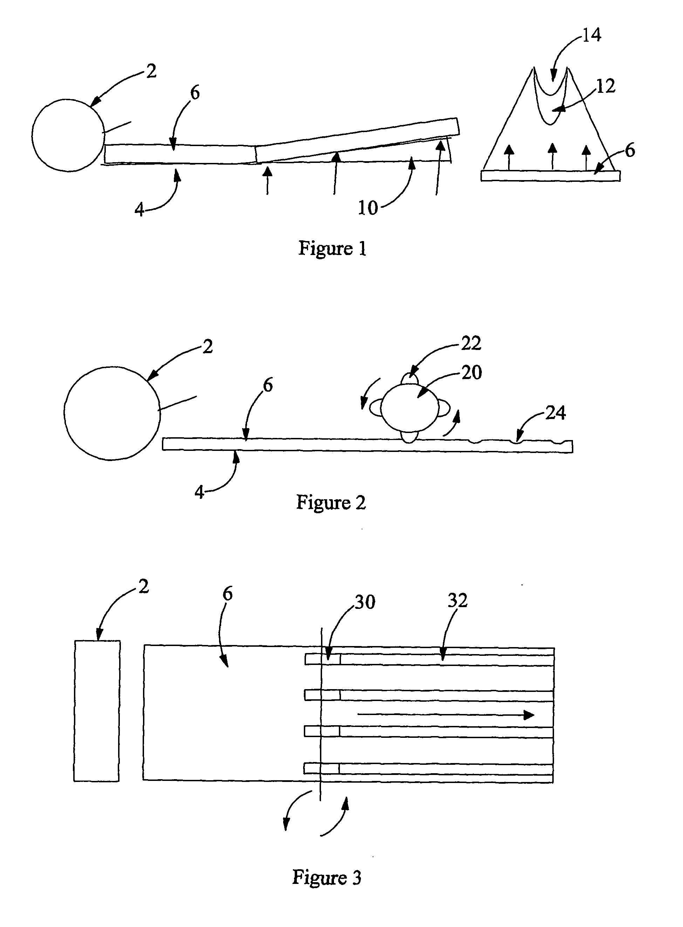

A layer of convoluted chocolate sheet 6 is formed as described above, and passed along a conveyor 10 having gradually inclined sides, as shown in Figure 1. This causes the edges of the layer to be bent upwards relative to the centre, forming a bar 12 having a U-shaped cross-section defining an open channel 14. Caramel filling, as described above, is deposited in the channel, and the entire bar is then enrobed in chocolate in the usual manner.

It will be appreciated that the shape of the final product can be varied by altering the incline at the edges of the conveyor. Thus, for example, the width and/or depth of the channel 14 can be varied. It is also possible to create bars having different cross-sectional shapes, such as arcs, V-shapes, etc.

### Example 2:

A layer of convoluted chocolate sheet 6 is formed as described above and passed under a roller 20 having four transverse projections 22 thereon, as shown in Figure 2. The projections 22 on the roller 20 compress the convoluted chocolate sheet so that each rotation of the roller produces four parallel transverse channels 24 in the surface of the layer. Caramel filling, as described above, is deposited in each of these channels, and the layer is cut between each pair of channels, to form a series of bars each having a single filled channel. These bars are then cut to the required length and enrobed in chocolate in the usual manner.

### Example 3:

A layer of convoluted chocolate sheet 6 is formed as described above and passed under four transversely-spaced rollers 30, as shown in Figure 3. Each roller compresses the convoluted chocolate sheet to produce a longitudinal channel 32 in the surface of the layer. Thus, after passing under the rollers 30, the layer of convoluted chocolate sheet has four transversely-spaced channels 32 in the surface. Caramel filling, as described above, is deposited in each of the channels, and the sheet is separated between each pair of channels to form four bars, each having a single filled channel. These bars are then cut to the required length and enrobed in chocolate in the usual manner.

### Example 4:

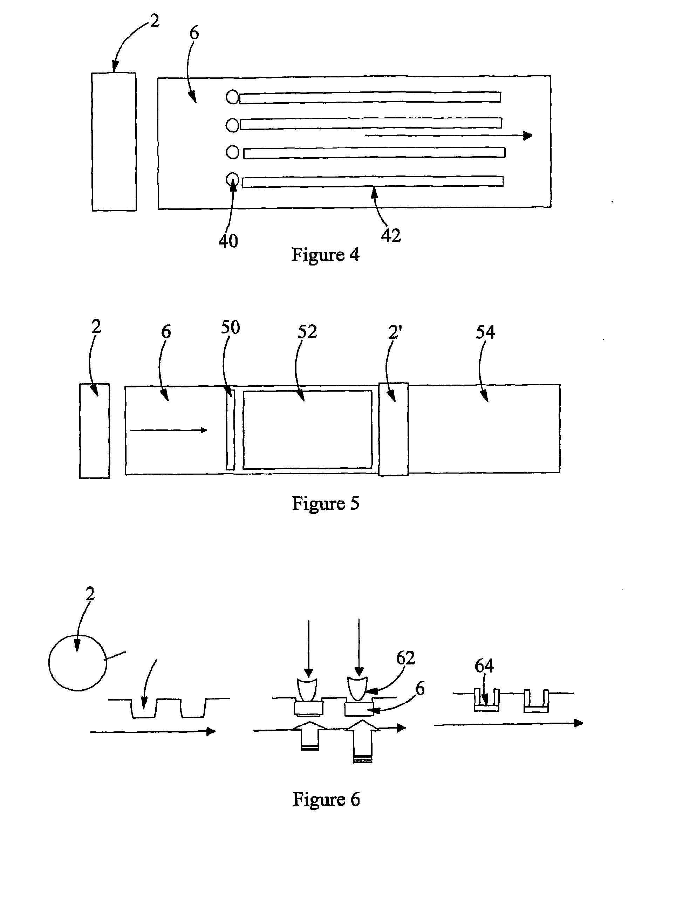

A layer of convoluted chocolate sheet 6 is formed as described above and passed under four transversely-spaced nozzles 40, as shown in Figure 4. Each of the nozzles deposits a strip of caramel filling 42, as described above, directly onto the freshly-formed layer of chocolate sheet, so that the caramel filling sinks into the layer under its own weight. The layer is then separated between each pair of caramel filling strips to form four bars, each having a single filled channel. The bars are then cut to the required length and enrobed in chocolate in the usual manner.

### Example 5:

A layer of convoluted chocolate sheet 6 is formed as described above. A layer of caramel filling 52, as described above, is applied to the top of the chocolate layer from a roller 50, and then a second layer of convoluted chocolate sheet 54 is placed onto the filling to form a sandwich structure, as shown in Figure 5. This is then cut into bars of the required size.

### Example 6:

A layer of convoluted chocolate sheet 6 is formed as described above and deposited into mould cavities 60. An appropriate male die 62 is then lightly pressed into the chocolate in each mould cavity 60, causing the convoluted chocolate sheet 64 to adopt the shape of the internal surface of the mould cavity without loss of the convoluted texture, as shown in Figure 6. The die is then removed, and a caramel filling, as described above, is deposited into the resulting cavity in the chocolate. A further layer of convoluted chocolate sheet is then placed across the opening of the mould cavity and lightly pressed into place to form a seal against the chocolate in the mould cavity, thereby enclosing the caramel filling.

### Example 7:

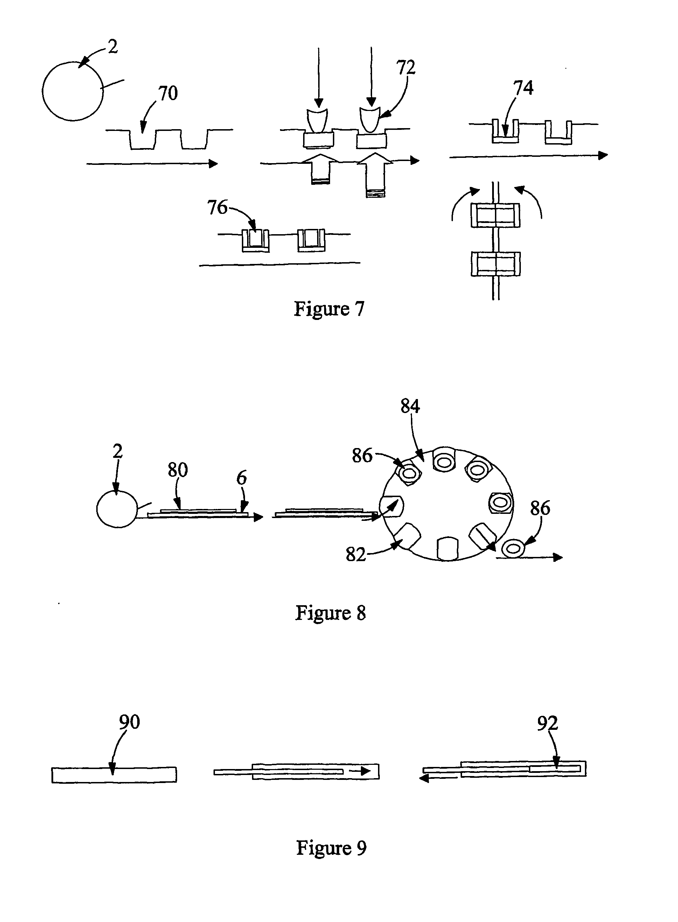

A layer of convoluted chocolate sheet 6 is formed as described above and deposited into mould cavities 70 in both halves of a book mould, as shown in Figure 7. An appropriate male die 72 is then lightly pressed into the chocolate in each mould cavity, causing the convoluted chocolate sheet 74 to adopt the shape of the internal surface of the mould cavity without loss of the convoluted texture. The die is then removed, and a caramel filling 76, as described above, is deposited into the resulting cavity in the chocolate. The book mould is then closed, bringing together the mould cavities in each half, so that the chocolate in a mould cavity in one half of the book mould is pressed against the chocolate in a corresponding cavity in the other half of the mould, thereby forming a seal around and enclosing the caramel filling.

### Example 8:

A layer of convoluted chocolate sheet 6 is formed as described above. A layer of caramel filling 80, as described above, is applied to the top of the sheet from a roller, and the layered composition fed step-wise into one of a series of housings 82 in a rotating drum 84, such that the housing causes the layers of chocolate sheet and filling to be rolled into a cylindrical structure 86 in which the convoluted chocolate sheet forms an outer layer around the inner caramel filling. The rotating drum 84 then advances one step to present a subsequent (empty) housing 82 to further layers of convoluted chocolate sheet/filling, as shown in Figure 8. The rolled product 86 is cooled within the housing 82 for a number of rotational steps of the drum 84, and then released from the drum and packaged.

### Example 9:

A layer of convoluted chocolate sheet 6 is formed as described above, and cut into bars 90 of the required size. A hole is drilled along the longitudinal axis of each bar, and caramel filling 92, as described above, is deposited within the hole, as shown in Figure 9.

### Example 10:

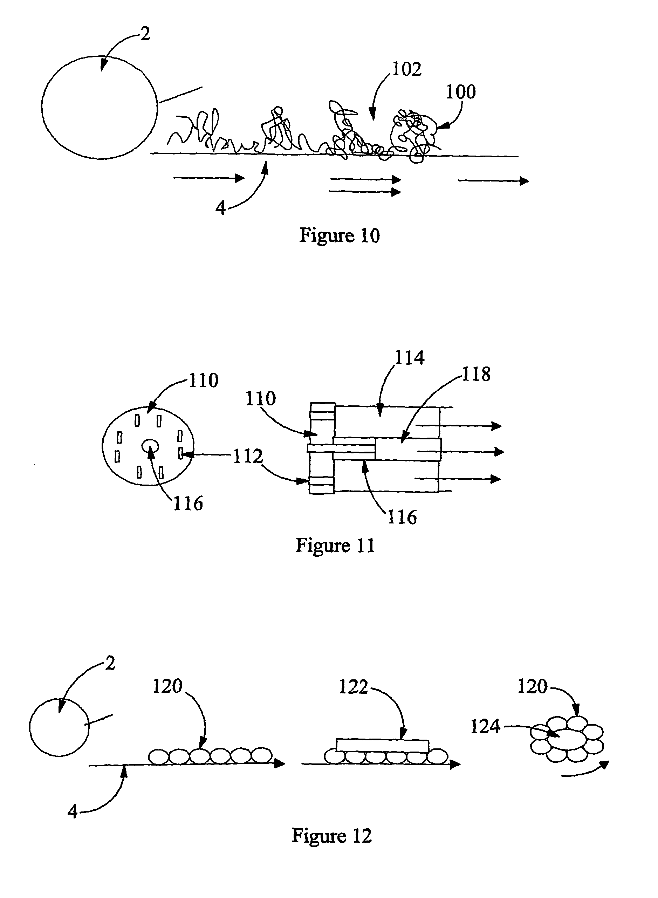

A layer of convoluted chocolate sheet is formed as described above, except that the speed of the conveyor 4 onto which the chocolate is deposited is varied during deposition to alter the thickness of the layer 100, as shown in Figure 10. A faster conveyor speed causes a thinner layer to be deposited, whilst a slower speed leads to deposition of a locally thicker layer. In this way, a layer of convoluted chocolate sheet is formed having a series of channels 102 therein. Caramel filling, as described above, is deposited within each channel. The layer is then separated between each pair of caramel filling strips to form four bars, each having a single filled channel. The bars are then cut to the required length and enrobed in chocolate in the usual manner.

### Example 11:

Chocolate is extruded through a circular die head 110 having eight slit-like outlets 112 arranged around the circumference, as shown in Figure 11. Each die outlet therefore creates a ribbon of chocolate 114, the ribbons adhering to one another on exit from the die to form a bar of convoluted chocolate sheet. A central nozzle 116 projects outwardly from the die head and delivers caramel filling 118, as described above, into the centre of the bar. The bar is then cut to the required length.

### Example 12:

Chocolate sheet is made as described in Chocolate, Cocoa and Confectionery: Science and Technology, by Bernard W. Minifie, 3rd edition, pages 187-188, and deposited into one of a series of housings in a rotating drum (not shown), such that the housing causes the chocolate sheet to be rolled into a tube 120. A layer of chocolate tubes 120 arranged in parallel is then formed on a conveyor 4, and a layer of caramel filling 122, as described above, is applied to the layer of chocolate tubes 120, as shown in Figure 12. The layered structure is then passed up an inclined plane (not shown) so that the leading edge of the layer is rolled up, forming a central cylindrical bar of caramel filling 124, surrounded by an outer layer of chocolate tubes 120.

### Example 13:

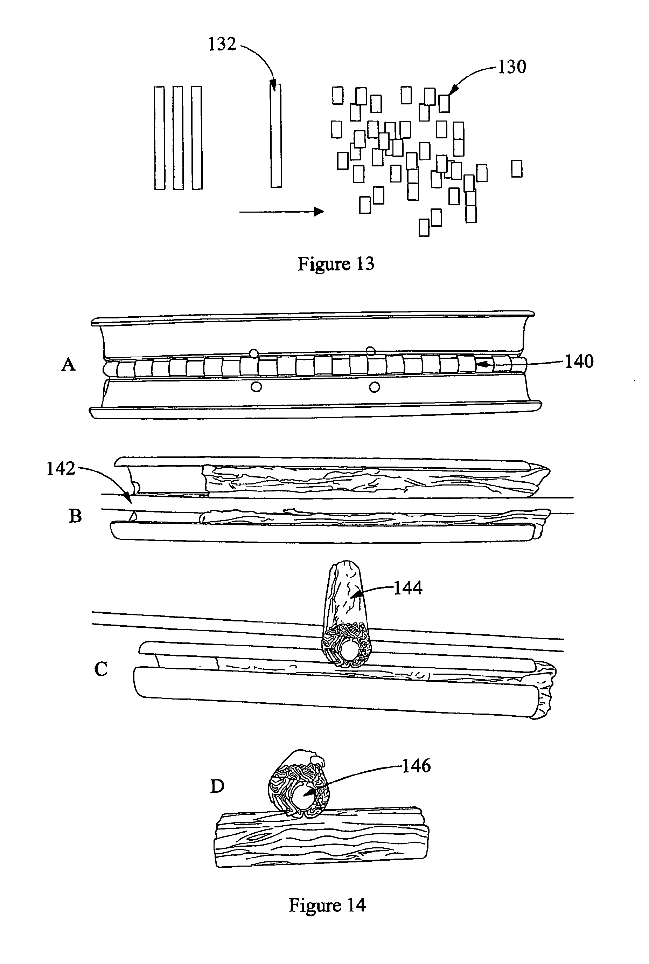

A convoluted chocolate sheet, as described above, is formed, chilled to below about 10 °C (for example, to 5 °C) and then broken into small fragments 130 by compression under a roller (not shown). A bar of caramel filling 132, as described above, is formed and rolled across a bed of the chocolate sheet fragments 130, so that the chocolate pieces adhere to the surface of the caramel bar, producing a coating of convoluted chocolate sheet pieces, as shown in Figure 13.

It will be understood that other methods may be used to break the convoluted chocolate sheet into small fragments, such as extrusion, the use of cutting blades, or any other method apparent to the skilled person.

### Example 14

A layer of convoluted chocolate sheet 6 is formed as described above is taken from the conveyor belt pre-'tamper' using a pallet knife, and placed within both halves of a book mould 140 (Figure 14A). A plastic rod 142 is placed in the centre of the book mould 140 (Figure 14B) and the book mould 140 closed around the plastic rod 142 to form a tube of convoluted chocolate sheet 144. Once the convoluted chocolate sheet material has firmed up, the rod 142 is removed (Figure 14C). The resulting hole is then filled with caramel filling 146, as described above (Figure 14D).

### Example 15

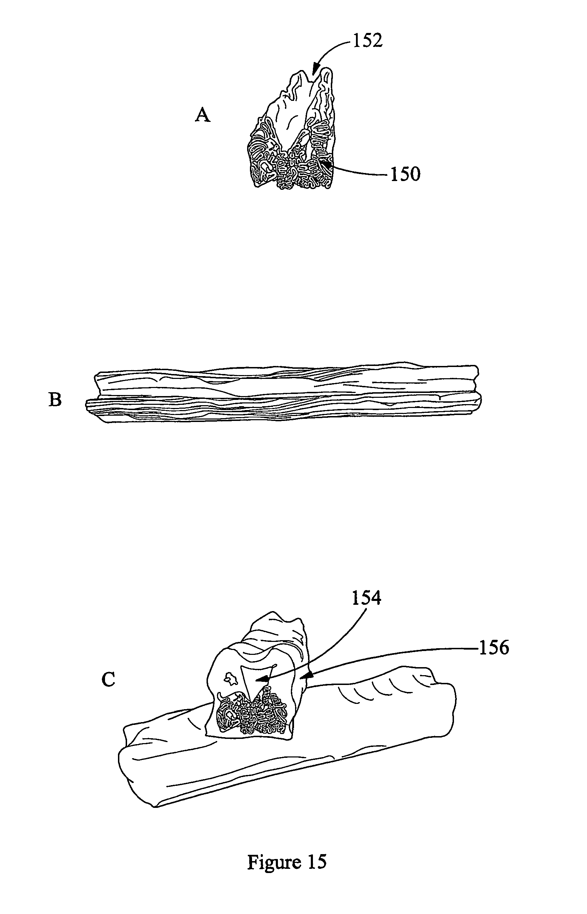

A layer of convoluted chocolate sheet 6 is formed as described above is taken from the conveyor belt post-'tamper' and cut to form a bar 150. A groove 152 is cut into the top surface of the bar 150 using a scalpel (Figures 15A and 15B). A caramel filling 154, as described above, is deposited within the groove 152, and the bar and filling are then enrobed with an outer layer of chocolate 156 (Figure 15C).

## Claims

1. A confectionery composition comprising a chocolate shell, said shell comprising a convoluted chocolate sheet and
(a) a continuous filling, or
(b) a filling located in a tubular cavity, said tubular cavity being defined by the chocolate shell which is itself tubular.

2. A confectionery composition as claimed in claim 1, wherein the chocolate shell comprises a layer of convoluted chocolate sheet, and contact between the filling and the layer of convoluted chocolate sheet is substantially limited to a surface of the layer of convoluted chocolate sheet.

3. A confectionery composition as claimed in claim 1 or claim 2, wherein the chocolate shell is substantially tubular.

4. A confectionery composition as claimed in claim 1 or claim 2, wherein the chocolate shell comprises a first layer of convoluted chocolate sheet and a second layer of convoluted chocolate sheet substantially parallel to the first, and the continuous filling comprises a layer of filling material disposed between the first and second layers of convoluted chocolate sheet.

5. A confectionery composition as claimed in claim 1 or claim 2, wherein the chocolate shell comprises a layer of convoluted chocolate sheet and the continuous filling comprises a layer of filling material, and the layer of convoluted chocolate sheet and the layer of filling material are rolled together so as to form a structure having a spiral cross-section.

6. A confectionery composition as claimed in claim 1, wherein the shell comprises a plurality of convoluted chocolate sheets, each convoluted chocolate sheet being substantially cylindrical; the continuous filling comprises an elongate bar of filling material; and the plurality of convoluted chocolate sheets are arranged around the surface of the elongate bar of filling material, substantially parallel to the longitudinal axis thereof.

7. A confectionery composition as claimed in any preceding claim wherein the continuous filling is completely enclosed within the chocolate shell.

8. A confectionery composition as claimed in any preceding claim, wherein the composition further comprises an outer coating of chocolate which substantially covers the chocolate shell.

9. A method of making a confectionery composition, comprising forming a substantially planar layer of convoluted chocolate sheet; shaping the layer of convoluted chocolate sheet so as to form a cavity; and applying a filling material to the layer of convoluted chocolate sheet forming the cavity.

10. A method of making a confectionery composition as claimed in claim 9, wherein applying a filling material to the layer of convoluted chocolate sheet is carried out after shaping of the layer of convoluted chocolate sheet so as to form a cavity.

11. A method of making a confectionery composition as claimed in claim 9, wherein applying a filling material to the layer of convoluted chocolate sheet is carried out before shaping of the layer of convoluted chocolate sheet so as to form a cavity.

12. A method of making a confectionery composition as claimed in claim 9, wherein applying a filling material to the layer of convoluted chocolate sheet is carried out concurrently with shaping of the layer of convoluted chocolate sheet so as to form a cavity.

13. A method of making a confectionery composition comprising providing a bar of filling material; and applying convoluted chocolate sheet material to the surface of the bar of filling material so as to substantially surround the filling material.

14. A method of making a confectionery composition comprising forming a layer of convoluted chocolate sheet having one or more cavities therein; and applying a filling material to at least one cavity in the layer of convoluted chocolate sheet.

15. A confectionery composition producible by the method as claimed in any one of claims 9 to 14.

## Patentansprüche

1. Konfektzusammensetzung, die eine Schokoladenhülle aufweist, wobei die Hülle aufweist: eine gewundene Schokoladentafel; und
(a) eine kontinuierliche Füllung; oder
(b) eine Füllung, die in einem schlauchartigen Hohlraum angeordnet wird, wobei der schlauchartige Hohlraum durch die Schokoladenhülle definiert wird, die selbst schlauchartig ist.

2. Konfektzusammensetzung nach Anspruch 1, bei der die Scholcoladenhülle eine Schicht der gewundenen Schokoladentafel aufweist und ein Kontakt zwischen der Füllung und der Schicht der gewundenen Schokoladentafel im Wesentlichen auf eine Oberfläche der Schicht der gewundenen Schokoladentafel begrenzt ist.

3. Konfektzusammensetzung nach Anspruch 1 oder Anspruch 2, bei der die Schokoladenhülle im Wesentlichen schlauchartig ist.

4. Konfektzusammensetzung nach Anspruch 1 oder Anspruch 2, bei der die Schokoladenhülle eine erste Schicht der gewundenen Schokoladentafel und eine zweite Schicht der gewundenen Schokoladentafel im Wesentlichen parallel zur ersten aufweist, und wobei die kontinuierliche Füllung eine Schicht des Füllmaterials aufweist, das zwischen der ersten und der zweiten Schicht der gewundenen Schokoladentafel angeordnet ist.

5. Konfektzusammensetzung nach Anspruch 1 oder Anspruch 2, bei der die Schokoladenhülle eine Schicht der gewundenen Schokoladentafel aufweist und die kontinuierliche Füllung eine Schicht des Füllmaterials aufweist, und wobei die Schicht der gewundenen Schokoladentafel und die Schicht des Füllmaterials zusammengerollt werden, um so eine Struktur mit einem spiralförmigen Querschnitt zu bilden.

6. Konfektzusammensetzung nach Anspruch 1, bei der die Hülle eine Vielzahl von gewundenen Schokoladentafeln aufweist, wobei eine jede gewundene Schokoladentafel im Wesentlichen zylindrisch ist; wobei die kontinuierliche Füllung eine längliche Stange des Füllmaterials aufweist; und wobei die Vielzahl der gewundenen Schokoladentafeln um die Oberfläche der länglichen Stange des Füllmaterials angeordnet wird, im Wesentlichen parallel zu deren Längsachse.

7. Konfektzusammensetzung nach einem der vorhergehenden Ansprüche, bei der die kontinuierliche Füllung vollständig innerhalb der Schokoladenhülle eingeschlossen ist.

8. Konfektzusammensetzung nach einem der vorhergehenden Ansprüche, bei der die Zusammensetzung außerdem einen äußeren Schokoladenüberzug aufweist, der im Wesentlichen die Schokoladenhülle bedeckt.

9. Verfahren zur Herstellung einer Konfektzusammensetzung, das die folgenden Schritte aufweist: Bilden einer im Wesentlichen ebenen Schicht der gewundenen Schokoladentafel; Formen der Schicht der gewundenen Schokoladentafel so, dass ein Hohlraum gebildet wird; und Aufbringen eines Füllmaterials auf die Schicht der gewundenen Schokoladentafel, die den Hohlraum bildet.

10. Verfahren zur Herstellung einer Konfektzusammensetzung nach Anspruch 9, bei dem der Schritt des Aufbringens eines Füllmaterials auf die Schicht der gewundenen Schokoladentafel nach dem Formen der Schicht der gewundenen Schokoladentafel durchgeführt wird, um so einen Hohlraum zu bilden.

11. Verfahren zur Herstellung einer Konfektzusammensetzung nach Anspruch 9, bei dem der Schritt des Aufbringens eines Füllmaterials auf die Schicht der gewundenen Schokoladentafel vor dem Formen der Schicht der gewundenen Schokoladentafel durchgeführt wird, um so einen Hohlraum zu bilden.

12. Verfahren zur Herstellung einer Konfektzusammensetzung nach Anspruch 9, bei dem der Schritt des Aufbringens eines Füllmaterials auf die Schicht der gewundenen Schokoladentafel gleichzeitig mit dem Formen der Schicht der gewundenen Schokoladentafel durchgeführt wird, um so einen Hohlraum zu bilden.

13. Verfahren zur Herstellung einer Konfektzusammensetzung, das die folgenden Schritte aufweist: Bereitstellen einer Stange des Füllmaterials; und Aufbringen des gewundenen Schokoladentafelmaterials auf die Oberfläche der Stange des Füllmaterials, um so im Wesentlichen das Füllmaterial zu umgeben.

14. Verfahren zur Herstellung einer Konfektzusammensetzung, das die folgenden Schritte aufweist: Bilden einer Schicht der gewundenen Schokoladentafel mit einem oder mehreren Hohlräumen darin; und Aufbringen eines Füllmaterials auf mindestens einen Hohlraum in der Schicht der gewundenen Schokoladentafel.

15. Konfektzusammensetzung, die mittels des Verfahrens nach einem der Ansprüche 9 bis 14 hergestellt werden kann.

## Revendications

1. Composition de confiserie, comprenant une coque de chocolat, ladite coque comprenant une feuille de chocolat sinuée ; et
une garniture continue ; ou
une garniture disposée dans une cavité tubulaire, ladite cavité tubulaire étant définie par la coque de chocolat, qui est elle-même tubulaire.

2. Composition de confiserie selon la revendication 1, dans laquelle la coque de chocolat comprend une couche de feuille de chocolat sinuée, le contact entre la garniture et la couche de la feuille de chocolat sinuée étant essentiellement limité à une surface de la couche de feuille de chocolat sinuée.

3. Composition de confiserie selon les revendications 1 ou 2, dans laquelle la coque de chocolat est pour l'essentiel tubulaire.

4. Composition de confiserie selon les revendications 1 ou 2, dans laquelle la coque de chocolat comprend une première couche de feuille de chocolat sinuée et une deuxième couche de feuille de chocolat sinuée, essentiellement parallèle à la première couche, la garniture continue comprenant une couche de matériau de garniture disposée entre les première et deuxième couches de feuille de chocolat sinuée.

5. Composition de confiserie selon les revendications 1 ou 2, dans laquelle la coque de chocolat comprend une couche de feuille de chocolat sinuée, la garniture continue comprenant une couche de matériau de garniture, la couche de feuille de chocolat sinuée et la couche de matériau de garniture étant enroulées ensemble de sorte à former une structure ayant une section transversale en spirale.

6. Composition de confiserie selon la revendication 1, dans laquelle la coque comprend plusieurs feuilles de chocolat sinuées, chaque feuille de chocolat sinuée étant essentiellement cylindrique ; la garniture continue comprenant une barre allongée de matériau de garniture ; et les plusieurs feuilles de chocolat sinuées étant agencées autour de la surface de la barre allongée de matériau de garniture, de manière essentiellement parallèle à l'axe longitudinal de celle-ci.

7. Composition de confiserie selon l'une quelconque des revendications précédentes, dans laquelle la garniture continue est complètement renfermée dans la coque de chocolat.

8. Composition de confiserie selon l'une quelconque des revendications précédentes, dans laquelle la composition comprend en outre un revêtement externe de chocolat, recouvrant essentiellement la coque de chocolat.

9. Procédé de production d'une composition de confiserie, comprenant les étapes de formation d'une couche essentiellement plane d'une feuille de chocolat sinuée; de formage de la couche de feuille de chocolat sinuée de sorte à former une cavité ; et d'application d'un matériau de garniture sur la couche de feuille de chocolat sinuée formant la cavité.

10. Procédé de production d'une composition de confiserie selon la revendication 9, dans lequel l'étape d'application du matériau de garniture sur la couche de feuille de chocolat sinuée est exécutée après l'étape de formage de la couche de feuille de chocolat sinuée en vue de former une cavité.

11. Procédé de production d'une composition de confiserie selon la revendication 9, dans lequel l'étape d'application d'un matériau de garniture sur la couche de feuille de chocolat sinuée est exécutée avant l'étape de formage de la couche de feuille de chocolat sinuée en vue de former une cavité.

12. Procédé de production d'une composition de confiserie selon la revendication 9, dans lequel l'étape d'application d'un matériau de garniture sur la couche de feuille de chocolat sinuée est exécutée de manière simultanée au formage de la couche de feuille de chocolat sinuée en vue de former une cavité.

13. Procédé de production d'une composition de confiserie, comprenant les étapes de fourniture d'une barre de matériau de garniture ; et d'application d'un matériau de feuille de chocolat sinuée sur la surface de la barre de matériau de garniture, de sorte à entourer pour l'essentiel le matériau de garniture.

14. Procédé de production d'une composition de confiserie comprenant les étapes de formation d'une couche de feuille de chocolat sinuée, comportant une ou plusieurs cavités ; et d'application d'un matériau de garniture sur au moins une cavité dans la couche de feuille de chocolat sinuée.

15. Composition de confiserie pouvant être produite par le procédé selon l'une quelconque des revendications 9 à 14.
